# EUROPÄISCHE PATENTSCHRIFT

(11) **EP 1 583 684 B1**
(45) Veröffentlichungstag und Bekanntmachung des Hinweises auf die Patenterteilung: **03.12.2008**
(21) Anmeldenummer: 04701290.1
(22) Anmeldetag: 10.01.2004
(51) Int. Cl.: B62D 29/00, B62D 21/15

(54) **LÄNGSTRÄGER FÜR EIN FAHRZEUG**
LONGITUDINAL BEAM FOR A VEHICLE
LONGERON POUR VEHICULE

(30) Priorität: 15.01.2003 DE 10301181
(43) Veröffentlichungstag der Anmeldung: 12.10.2005
(73) Patentinhaber: Bayerische Motoren Werke Aktiengesellschaft, 80809 München (DE)
(72) Erfinder: DRAGOI, Cristian, 81477 München (DE); DRECOLL, Nils, 22457 Hamburg (DE)
(74) Vertreter: Schernhammer, Herbert
(86) Internationale Anmeldenummer: PCT/EP2004/000133
(87) Internationale Veröffentlichungsnummer: WO 2004/062988

(56) Entgegenhaltungen:
- EP-A- 0 896 919
- DE-A- 2 457 400
- DE-A- 10 113 539
- DE-A- 19 645 962
- GB-A- 2 341 149

## Beschreibung

Die Erfindung bezieht sich auf einen Längsträger für ein Fahrzeug nach dem Oberbegriff des Anspruchs 1.

Längsträger für Fahrzeuge sind allgemein bekannt und zeichnen sich durch einfache Herstellung aus. Ein entlang der Längserstreckung unterschiedlicher Querschnittsverlauf ist jedoch nicht ohne weiteres zu erreichen. Außerdem gestaltet sich die Einbringung von Buchsen schwierig, wie beispielsweise aus der DE 196 45 962 A1 hervorgeht.

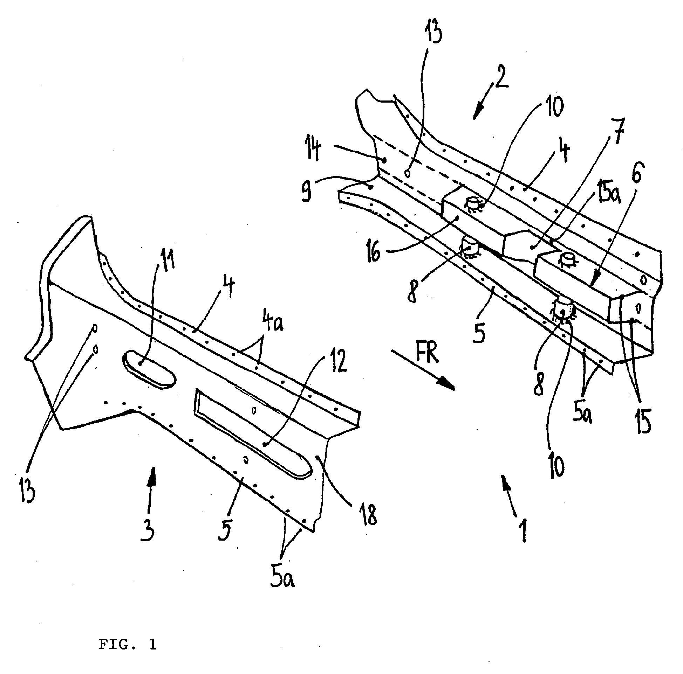

Ein Längsträger nach dem Oberbegriff des Anspruchs 1 geht aus der GB 2 341 149 A hervor, die in Fig. 4 einen Längsträger beschreibt, der von zwei offenen Strangprofilen gebildet wird, die zusammen einen geschlossenen Querschnitt bilden. An der Innenseite eines der Strangprofile sind Verstärkungsprofile eingesetzt.

Ferner ist es aus der DE 24 57 400 A1 ein Längsträger für ein Fahrzeug bekannt, der im Bereich seiner Querschnittsecken quer verlaufende Einschnitte zur Einleitung einer crashbedingten Verformung aufweist.

Aufgabe der Erfindung ist es, unter Verwendung eines Strangprofils einen einfach herstellbaren Längsträger hoher Steifigkeit für ein Fahrzeug bereitzustellen, der ein gezieltes Stauchverhalten im Crashfall aufweist.

Diese Aufgabe wird durch einen Längsträger mit den Merkmalen des Anspruchs 1 gelöst.

Kerngedanke ist es hierbei, bei einem Strangprofil mit einem offenen Querschnitt, das durch ein Schließprofil zu einem geschlossenen Querschnitt ergänzt wird, eine innenliegende versteifende Hohlkammer vorzusehen, die in das Strangprofil integriert ist. Die guten Steifigkeitseigenschaften des geschlossenen Querschnitts des Längsträgers hinsichtlich aller mechanischen Beanspruchungsarten werden durch die innenliegende Hohlkammer weiter verbessert. Bei dem erfindungsgemäßen Längsträger ist es außerdem möglich, vor dem Aufsetzen des Schließprofils im Inneren des Längsträgers Veränderungen vorzunehmen, die bei einem geschlossenen Strangprofil nicht oder nur mit großem Aufwand möglich sind. Solche Veränderungen sind beispielsweise das Einbringen von Verstärkungen, abschnittsweises Entfernen von Material, Einsetzen von Befestigungselementen etc.

Im Vergleich zu einem in Blechschalenbauweise hergestellten Längsträger mit einer innenliegenden versteifenden Hohlkammer oder einem aus Strangprofilen hergestellten Längsträger mit eingeschweißten Verstärkungsprofilen (wie aus der GB 2 341 149 A bekannt) ergibt sich durch die erfindungsgemäße Integration der Hohlkammer an das Strangprofil eine Verringerung der Anzahl der Bauteile und damit der erforderlichen Fügevorgänge.

Zwar ist aus der DE 39 18 280 A1 eine Kraftfahrzeugkarosserie bekannt, mit einem durch ein Strangprofil gebildeten Rahmenteil, das von einem vorgeformten Blechteil überdeckt ist. Bei der bekannten Lösung wird mit dem Blechteil das geschlossene Strangprofil überdeckt, um zur Außenseite des Kraftfahrzeuges hin eine Sichtfläche mit kompliziertem und sich veränderndem Querschnittsverlauf bereitzustellen. Im Gegensatz hierzu wird bei der vorliegenden Erfindung ein offenes Strangprofil verwendet, das innenseitig eine versteifende Hohlkammer hat, wobei Strangprofil und Schließprofil zusammen den tragenden Querschnitt bilden.

Entsprechend der Erfindung wird die Hohlkammer teilweise entfernt. Dies kann in vielfältiger Weise erfolgen: Einbringen wenigstens eines Schlitzes senkrecht oder schräg zur Längsrichtung der Hohlkammer, Einbringen wenigstens einer lochartigen Öffnung in die Hohlkammer, abschnittsweises Entfernen wenigstens einer Wandung der Hohlkammer etc. Durch einen gezielten Materialabtrag, insbesondere durch ein Fräswerkzeug, kann die Verformung des Längsträgers bei einem Aufprall des Fahrzeugs so eingestellt werden, dass ein möglichst optimaler Energieabbau durch gezieltes Stauchen (Falten) des Längsträgers erreicht wird.

In analoger Weise kann in das Innere des Längsträgers abschnittsweise auch zusätzliches Material eingebracht werden. Durch derartige lokale Verstärkungen kann das Verformungsverhalten des Längsträgers unter Crashkräften ebenso beeinflusst werden wie durch die oben beschriebenen Materialabtragungen.

Das offene Strangprofil ermöglicht außerdem in einfacher Weise die Einbringung von Befestigungselementen, wie beispielsweise von Buchsen zur Aufnahme von Anbauteilen an den Längsträgern. Derartige Buchsen können bei guter Zugänglichkeit in das offene Strangprofil eingeschweißt werden. Hierdurch erübrigen sich aufwendige Maßnahmen zur Erreichung eines spielfreien Sitzes der Buchse im Längsträger, wie in der eingangs genannten DE 196 45 962 A1 beschrieben.

Das Schließprofil kann in vielfältiger Weise hergestellt und aufgebaut sein. Vorteilhafterweise handelt es sich bei dem Schließprofil um ein Blechformteil, bevorzugt um ein tiefgezogenes Blechbauteil, dessen Geometrie innerhalb weiter Grenzen frei gestaltet werden kann. Selbstverständlich ist es auch möglich, als Schließprofil ein Strangprofil zu verwenden, das gegebenenfalls umgeformt wird, beispielsweise durch ein Tiefziehverfahren.

Auch das Strangprofil mit der Hohlkammer kann durch Tiefziehen einen über seiner Längserstreckung veränderlichen Querschnitt erhalten. Das Tiefziehen beschränkt sich hierbei in der Regel auf die nicht durch das Hohlprofil ausgesteiften Bereiche des Strangprofils.

Bei einer vorteilhaften Ausführung der Erfindung sind das Strangprofil und das Schließprofil jeweils L-förmig, so dass eine gute Zugänglichkeit in das Innere des Längsträgers besteht. Außerdem können bei dieser L-förmigen Ausgestaltung die beiden Längsträgerhälften in einfacher Weise entlang von Flanschen miteinander verbunden werden, beispielsweise durch eine Nietverbindung. Bevorzugt wird die Vernietung durch eine Verklebung ergänzt.

Zusätzlich können die beiden Längsträgerhälften durch eine Lochschweißung verbunden werden, indem bevorzugt durch wenigstens eine Öffnung im Schließprofil dieses mit der darunter liegenden, bis an die Innenseite des Schließprofils heranreichenden Hohlkammer des Strangprofils verschweißt wird.

Durch seinen Aufbau ist der Längsträger insbesondere geeignet, als vorderer oder hinterer Längsträger eines Kraftfahrzeuges eingesetzt zu werden. Mittels der in einfacher Weise in das Innere des Längsträgers eingeschweißten Buchsen können Fahrwerkskomponenten spielfrei befestigt werden.

Die beiden Hälften des Längsträgers bestehen bevorzugt aus Leichtmetall, beispielsweise einer Aluminiumlegierung.

Ein mögliches Ausführungsbeispiel der Erfindung ist in der Zeichnung dargestellt und wird nachfolgend näher beschrieben. Die einzige Figur zeigt hierbei in perspektivischer Darstellung die beiden Hälften eines erfindungsgemäßen Längsträgers.

Ein in seiner Gesamtheit mit 1 bezeichneter Längsträger für ein Fahrzeug setzt sich aus einem Strangprofil 2 und einem Schließprofil 3 zusammen. Zur Kennzeichnung der Einbaulage des Längsträgers 1 im Fahrzeug ist die Fahrtrichtung mit FR angegeben. Strangprofil 2 und Schließprofil 3 sind im Querschnitt jeweils etwa L-förmig und ergänzen sich zum Längsträger 1, mit einem geschlossenen, etwa rechteckförmigen Querschnitt. Die beiden Profile 2 und 3 werden entlang von Flanschen 4 und 5 durch ein Nietverfahren miteinander verbunden. Die Nietstellen 4a und 5a sind in der Zeichnung angedeutet.

Das Strangprofil 2 weist an seiner Innenseite eine Hohlkammer 6 auf, die nur einen Teil der Seitenwand 14 des Strangprofils 2 überdeckt. Die Hohlkammer 6 hat zwei etwa senkrecht zur Seitenwand 14 verlaufende Schenkel 15 sowie einen die Schenkel 15 verbindenden Steg 16. Die Hohlkammer 6 bewirkt gezielt eine Versteifung des offenen Strangprofils 2 und damit des gesamten Längsträgers 1. Im mittleren Bereich des Strangprofils 2 ist die Hohlkammer 6 über eine Längserstreckung von einigen Zentimetern entfernt (Befräsung 7). Hierbei ist die Befräsung 7 so durchgeführt, dass der Steg 16 der Hohlkammer vollständig und beide Schenkel 15 mit Ausnahme eines Fußabschnitts 15a geringer Resthöhe entfernt wurden. Am fahrtrichtungsabgewandten Endabschnitt des Längsträgers 1 sowie in seinem vordersten Endbereich ist die Hohlkammer 6 vollständig entfernt, wie aus den gestrichelten Linien in diesem Bereich hervorgeht, die den ursprünglichen Verlauf der Schenkel 15 entlang des Strangprofils 2 zeigen.

Über Durchgangsöffnungen in der etwa horizontal verlaufenden Unterseite 9 des Strangprofils 2 sind Buchsen 8 eingesetzt, die der Aufnahme von Fahrwerksteilen dienen. Die Buchsen 8 durchsetzen Durchgangsöffnungen in der Hohlkammer 6 und sind über Schweißnähte 10 sowohl mit der Unterseite 9 des Strangprofils als auch mit beiden Schenkeln 15 der Hohlkammer 6 spielfrei verbunden.

Das Schließprofil 3 ist als Blechbauteil im Tiefziehverfahren hergestellt und weist an seiner Seitenwand 18 Versteifungssicken 11 und 12 auf. Im Bereich der Versteifungssicken 11 und 12 kann wenigstens eine Durchgangsöffnungen vorgesehen sein, über die eine Lochverschweißung des Schließprofils 3 mit dem darunter liegenden Steg 16 der Hohlkammer 6 erfolgt. Hierdurch kann die Steifigkeit des Längsträgers 1 weiter gezielt erhöht werden, da durch eine oder mehrere lokale Lochverschweißungen ein Ausbeulen des Längsträgers 1 unter Last vermieden wird.

Beide Profile 2 und 3 erweitern sich an ihren fahrtrichtungsabgewandten Endabschnitten jeweils glockenförmig und werden mit ihren Enden an die Tragstruktur der Fahrzeugkarosserie angebunden. An beiden Profilen 2 und 3 sind mehrere Durchgangsöffnungen 13 für die Schraubbefestigung von Anbauteilen vorgesehen.

Die Profile 2 und 3 bestehen beispielsweise aus einer Aluminiumlegierung, wie AC 300 HF. Die Buchsen 8 werden über eine MIG-Verschweißung in den Längsträger eingebracht. Ebenso werden die Lochschweißungen gegebenenfalls im MIG-Verfahren vorgenommen.

Durch die Verbindung der beiden Profile 2 und 3 entlang der Flansche 4 und 5 über ein Nietverfahren wird im Unterschied zu einem Schweißverfahren keine Wärme eingebracht, so dass bei der Herstellung der im Crashfall hoch belasteten Längsträger 1 keine nachgeschaltete Wärmebehandlung erforderlich ist. Zur Abdichtung und zur weiteren Erhöhung der Steifigkeit des Längsträgers 1 wird entlang der Flansche 4 und 5 zusätzlich Klebstoff eingebracht.

## Patentansprüche

1. Längsträger (1) für ein Fahrzeug, der wenigstens ein Strangprofil (2) mit einem offenen Querschnitt aufweist, wobei ein Schließprofil (3) vorgesehen ist, das den Längsträger (1) zu einem geschlossenen Querschnitt ergänzt,
**dadurch gekennzeichnet, dass** das Strangprofil (2) wenigstens eine Hohlkammer (6) an der Innenseite des offenen Querschnittes aufweist, die integral mit dem Strangprofil (2) ausgebildet und teilweise entfernt ist.

2. Längsträger nach Anspruch 1,
**dadurch gekennzeichnet, dass** die Hohlkammer (6) auf wenigstens einem Teil ihrer Längserstreckung durch ein Fräsverfahren entfernt ist.

3. Längsträger nach Anspruch 1 oder 2,
**dadurch gekennzeichnet, dass** in das Strangprofil (2) wenigstens eine Buchse (8) eingesetzt ist.

4. Längsträger nach Anspruch 3,
**dadurch gekennzeichnet, dass** die Buchse (8) mit der Hohlkammer (6) verbunden ist.

5. Längsträger nach einem der vorgenannten Ansprüche,
**dadurch gekennzeichnet, dass** das Schließprofil (3) ein Blechformteil ist.

6. Längsträger nach einem der vorgenannten Ansprüche,
**dadurch gekennzeichnet, dass** das Strangprofil (2) wenigstens im Bereich außerhalb der Hohlkammer (6) durch ein Tiefziehverfahren umgeformt ist.

7. Längsträger nach einem der vorgenannten Ansprüche,
**dadurch gekennzeichnet, dass** das Strangprofil (2) und das Schließprofil (3) jeweils einen im wesentlichen L-förmigen Querschnitt aufweisen.

8. Längsträger nach einem der vorgenannten Ansprüche,
**dadurch gekennzeichnet, dass** Strangprofil (2) und Schließprofil (3) entlang von randseitigen Flanschen (4, 5) an beiden Profilen (2, 3) über Nieten miteinander verbunden sind.

9. Längsträger nach einem der vorgenannten Ansprüche,
**dadurch gekennzeichnet, dass** Strangprofil (2) und Schließprofil (3) entlang von Flanschen (4, 5) an beiden Profilen (2, 3) über Klebestoff miteinander verbunden sind.

10. Längsträger nach einem der vorgenannten Ansprüche,
**dadurch gekennzeichnet, dass** Strangprofil (2) und Schließprofil (3) über wenigstens eine Lochschweißung miteinander verbunden sind.

11. Längsträger nach einem der vorgenannten Ansprüche,
**dadurch gekennzeichnet, dass** der Längsträger (1) als vorderer oder hinterer Längsträger eines Kraftfahrzeuges ausgebildet ist, mit wenigstens einer Buchse (8) zur Aufnahme von Fahrzeugaggregaten und/oder Fahrwerkskomponenten.

## Claims

1. A side member (1) for a vehicle, which has at least one extruded profile (2) with an open cross-section, a closed profile (3) being provided which supplements the side member (1) to form a closed cross-section,
**characterised in that** the extruded profile (2) has at least one hollow chamber (6) on the inner side of the open cross-section, which is configured integrally with the extruded profile (2) and is partially removed.

2. A side member according to claim 1,
**characterised in that** the hollow chamber (6) is removed by means of a milling method on at least one portion of its longitudinal extent.

3. A side member according to claim 1 or claim 2,
**characterised in that** at least one bush (8) is inserted into the extruded profile (2).

4. A side member according to claim 3,
**characterised in that** the bush (8) is connected to the hollow chamber (6).

5. A side member according to any one of the preceding claims,
**characterised in that** the closed profile (3) is a preformed sheet metal part.

6. A side member according to any one of the preceding claims,
**characterised in that** the extruded profile (2) is formed at least in the region outside the hollow chamber (6) by a deep drawing method.

7. A side member according to any one of the preceding claims,
**characterised in that** the extruded profile (2) and the closes profile (3) in each case have a substantially L-shaped cross-section.

8. A side member according to any one of the preceding claims,
**characterised in that** the extruded profile (2) and closed profile (3) are connected to one another along edge flanges (4, 5) on both profiles (2, 3) by means of rivets.

9. A side member according to any one of the preceding claims,
**characterised in that** the extruded profile (2) and closed profile (3) are connected to one another along flanges (4, 5) on both profiles (2, 3) by means of adhesive.

10. A side member according to any one of the preceding claims,
**characterised in that** the extruded profile (2) and closed profile (3) are connected to one another by means of at least one slot welding.

11. A side member according to any one of the preceding claims,
**characterised in that** the side member (1) is configured as a front or rear side member of a motor vehicle, with at least one bush (8) for receiving vehicle assemblies and/or chassis components.

## Revendications

1. Longeron (1) pour un véhicule comprenant au moins un profilé (2) à section ouverte, avec un profilé de fermeture (3) qui complète le longeron (1) pour lui donner une section fermée,
**caractérisé en ce que**
le profilé (2) comporte au moins une chambre creuse (6) sur le côté intérieur de la section ouverte, cette chambre creuse étant réalisée en une seule pièce dans le profilé (2) et cette chambre est en partie enlevée.

2. Longeron selon la revendication 1,
**caractérisé en ce que**
la chambre creuse (6) est enlevée sur au moins une partie de son extension longitudinale par une opération de fraisage.

3. Longeron selon la revendication 1 ou 2,
**caractérisé en ce qu'**
au moins une douille (8) est logée dans le profilé (2).

4. Longeron selon la revendication 3,
**caractérisé en ce que**
la douille (8) est reliée à la chambre creuse (6).

5. Longeron selon les revendications précédentes,
**caractérisé en ce que**
le profilé de fermeture (3) est une pièce en tôle mise en forme.

6. Longeron selon les revendications précédentes,
**caractérisé en ce que**
le profilé (2) est transformé par un procédé d'emboutissage profond au moins dans la zone à l'extérieur de la chambre creuse (6).

7. Longeron selon les revendications précédentes,
**caractérisé en ce que**
le profilé (2) et le profilé de fermeture (3) ont chacun une section pratiquement en forme de L.

8. Longeron selon les revendications précédentes,
**caractérisé en ce que**
le profilé (2) et le profilé de fermeture (3) sont reliés l'un à l'autre par rivetage le long des ailes (4, 5) des deux profilés (2, 3).

9. Longeron selon les revendications précédentes,
**caractérisé en ce que**
le profilé (2) et le profilé de fermeture (3) sont reliés l'un à l'autre par collage le long des ailes (4, 5) des deux profilés (2, 3).

10. Longeron selon les revendications précédentes,
**caractérisé en ce que**
le profilé (2) et le profilé de fermeture (3) sont reliés l'un à l'autre par au moins un soudage par trous.

11. Longeron selon les revendications précédentes,
**caractérisé en ce que**
le longeron (1) est le longeron avant ou le longeron arrière d'un véhicule automobile avec au moins un manchon (8) pour recevoir des équipements du véhicule et/ou des composants du châssis.
